# EUROPEAN PATENT APPLICATION

(11) **EP 1 551 084 A2**
(43) Date of publication of application: **06.07.2005**
(21) Application number: 04078506.5
(22) Date of filing: 23.12.2004
(51) Int. Cl.: H01R 13/73

(54) **Distributor apparatus for television and satellite units**

(30) Priority: 29.12.2003 IT MI20032609
(71) Applicant: BTICINO S.p.A., 20154 Milano (IT)
(72) Inventor: Santini, Ernesto, 28060 Sozzago (Novara) (IT)
(74) Representative: Coppo, Alessandro

(57) **Abstract**

A distributor apparatus (10) for television and satellite units, of the modular type, suitable for distributing the television and/or satellite signal towards the derived plugs (18A, 18B, 18C, 18D) connected to the unit; the distributor (10) can be installed in residential, industrial or commercial buildings, inside DIN panels or cabinets and is housed in a container (41) or modular DIN case (41) with a recessed profile, in order to satisfy the situations where the unit needs both a large modular capacity and to be pleasing to the eye.

## Description

The present invention refers to a distributor apparatus for television and satellite units, in particular of the modular type, suitable for sending the television and/or satellite signal to a series of derived plugs arranged inside residential, industrial or commercial buildings.

More specifically, the invention concerns a method for integrating a television and/or satellite distributor inside a modular DIN case, which is installed, in turn, in the home or a small commercial building, in DIN panels or cabinets.

Modular DIN cabinets are intended to satisfy situations in which the unit requires a large modular capacity and, at the same time, that is pleasing to the eye.

They are suitable for containing power supply apparatuses, switches, disconnecting switches and electronic apparatuses in general.

The constructions that are available can be built-in or wall-mounted and, to be specific, wall-mounted panels can be coupled using suitable connection kits, whereas built-in panels are characterised by a removable frame and a sheet metal container that can be built into a wall or fixed inside hollow walls for the insertion of the frame.

Wall-mounted panels are also available in modular form in order to increase the capacity of the unit and its functionality.

The modular expandability of the cabinet ensures extreme flexibility of use and management, giving advantages both in terms of distribution and for the end user, since the functions and operating methods are further defined in the programming and personalisation step, through the introduction of simple codes or through dedicated software.

Nevertheless, as units become increasingly large and complex, one of the key problems consists of the difficulty of arrangement and positioning of the distribution and deriving apparatuses.

Within the framework of the aforementioned requirements, the purpose of the present invention is that of indicating a distributor apparatus for television and satellite units that can be adjusted in size so as to be able to be housed inside modular cases, thus limiting the total bulk and achieving the main function of being able to be assembled inside cabinets, also of the modular type and divided into compartments, which have a series of guides suitably shaped for the fastening of the quoted modular DIN cases.

Another purpose of the present invention is that of making a distributor apparatus for television and satellite units of the modular type, which can be inserted inside modular containers of the type foreseen by current DIN standards, i.e. built for housing a plurality of modules.

A further purpose of the invention is that of indicating a distributor apparatus for television and satellite units that is simple to install and to use, as well as efficient, functional, cost-effective, safe and reliable.

These and other purposes, according to the present invention, are accomplished by making a distributor apparatus for television and satellite units, according to claim 1, to which we refer for the sake of brevity.

Advantageously, according to the present invention, a distributor apparatus, suitable for sending distributor television and/or satellite signals to the input of a series of derived plugs arranged inside a building (residential, industrial or commercial) and forming part of a television and/or satellite unit, can be assembled inside modular cases to be mounted on DIN cabinet guides, also modular, containing all of the parts necessary for the system to be installed.

In this way, the installation of the units is made easier and the arrangement of the entire wiring is simplified.

Moreover, the fact that modular cases built according to current DIN standards are used favours a substantial degree of standardization and containment of costs, since such containers foresee a predetermined shape and consist of identical modular elements, suitable for being assembled in a variable number to make a suitably sized structure.

Finally, such containers are available in a limited number of different types, so as to reduce the number of moulds that can be used to obtain the desired shapes, and they can be fixed to suitable connection guides foreseen inside the modular containment cabinets, in place of attachment to the wall; the connection guides are also standardised according to the current international DIN standard (for this type of application the guide known as "DIN 35" is normally used).

Further characteristics and advantages of a distributor apparatus for television and satellite units, of the modular type, according to the present invention, shall become clearer from the following description, given as an example and not for limiting purposes, referring to the attached figures, in which:
- figure 1 is a schematic view of a television and satellite unit with TV and satellite separate, with the satellite signal deriving from a single dish or from a multiswitch, in which a modular distributor apparatus according to the present invention is used;
- figure 2 is a schematic view of a television and satellite unit with TV and satellite with multiswitch (from a single cable), in which a modular distributor apparatus according to the present invention is used;
- figure 3 is a schematic view of a mono-cable television and satellite unit, in which a modular distributor apparatus according to the present invention is used;
- figure 4 is a schematic side view of a variant embodiment of the modular distributor apparatus, according to the present invention.

With reference to the aforementioned figures, a distributor apparatus for television and satellite units, able to be installed in the home or in a small commercial building and suitable for carrying out the function of a concentrator and switch of the input signals, is generically indicated with 10.

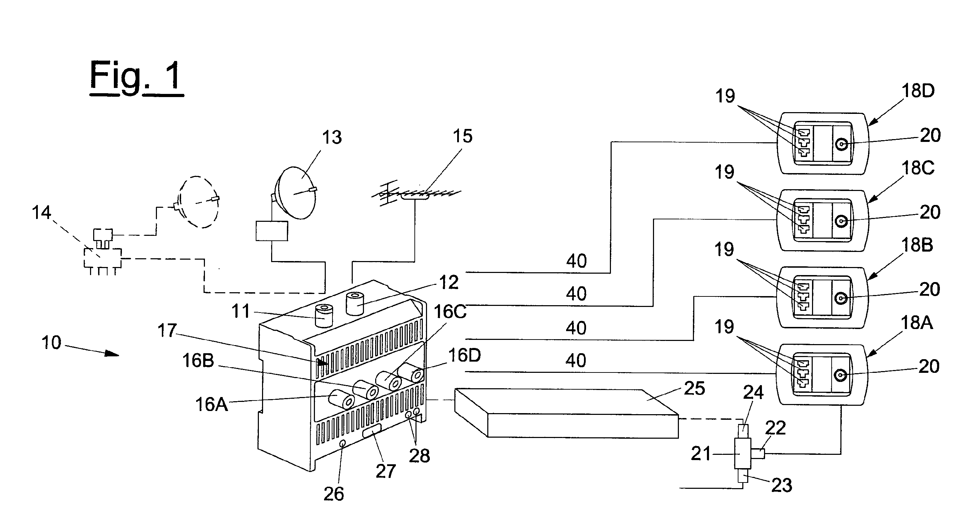

With particular reference to figure 1, the input signals at the plugs 11, 12 of the distributor 10 respectively come from a single satellite dish 13 or from a multiswitch 14 (signal having a frequency within the range 950-2150 MHz) and from a television antenna 15 (signal with frequency within the range 40-2150 MHz).

The connection with the television and/or satellite unit of the building takes place through four plugs (those indicated with 16A, 16B, 16C, 16D), which can be used front the front 17 of the distributor 10, which are connected, through cabled conductors 40, to as many derived plugs 18A, 18B, 18C, 18D.

The derived plugs 18A, 18B, 18C, 18D can contain further switches and/or, for example, telephone or interphone connection elements (like those indicated with 19 and visible in the plugs 18A, 18B, 18C, 18D) and foresee the connection 20 for the entry of the coaxial connection cable to the television apparatuses.

In particular, the coaxial cable can be directly connected to the television apparatuses (like in the case of the derived plugs indicated with 18B, 18C, 18D) or else it can support a television and satellite signal and, in such a case, it is connected, at 22, to a distributor element 21, the outputs 23, 24 of which are respectively sent to one or more television sets and to a decoder 25 of the video satellite signal.

On the front 17 of the distributor apparatus 10 there is also an LED 26 for indicating the presence of power supply, an on-switch 27 and further terminals 28, from which the power supply is taken (variable from 12 to 35 Volts in direct current) for the operation of the distributor 10.

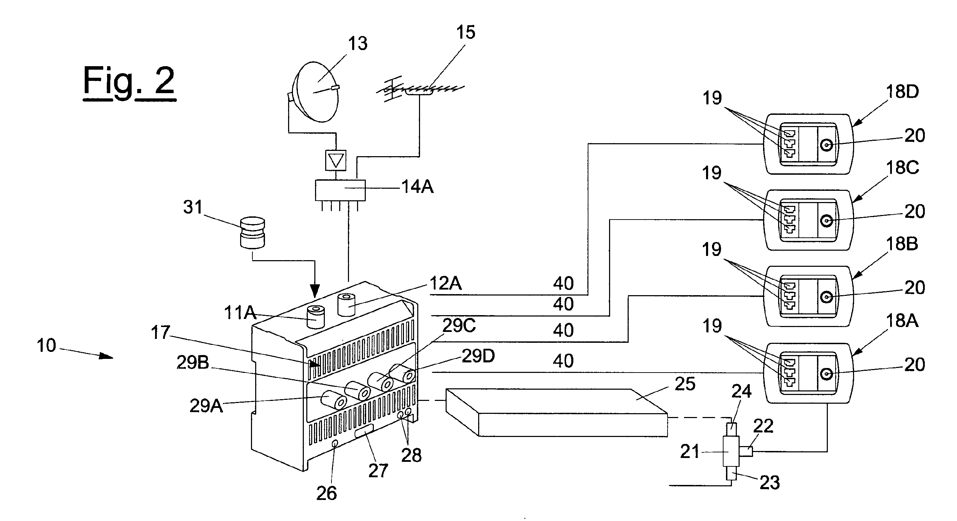

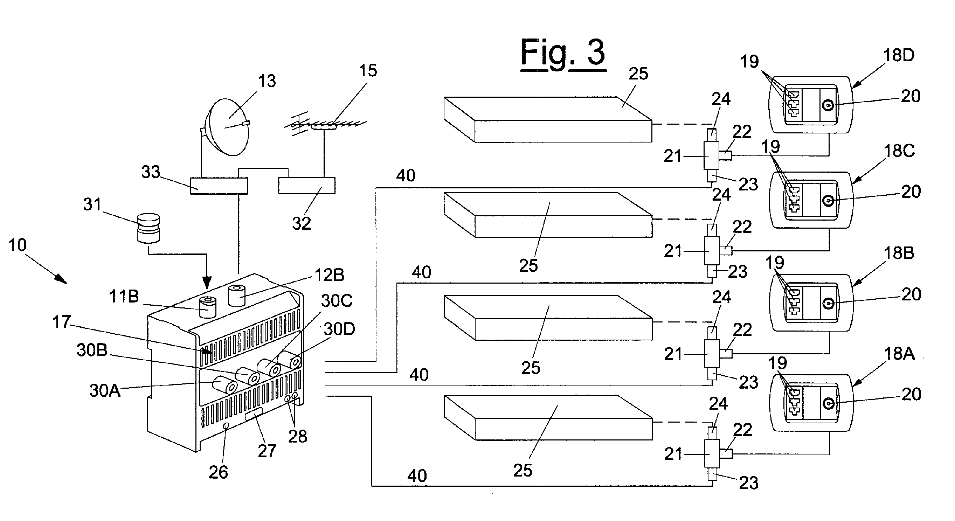

The further attached figures 2 and 3 refer to as many connection methods of the distributor apparatus 10, respectively, in television and satellite units with a multiswitch from a single cable and in mono-cable television and satellite units.

In the case of figure 2, the input plugs 11A and 12A are closed, respectively, on an insulated 75 Ohm closing impedance, generically indicated with 31, and on a multiswitch 14A, to which the television signals coming from a dish 13 and from an antenna 15 refer; the plugs 29A, 29B, 29C, 29D, which can be arranged on the front 17 of the distributor 10, through the cabled conductors 40, send the video signals to the derived plugs 18A, 18B, 18C, 18D, which, in turn, foresee the connection 20 for the entry of the coaxial connection cable to the television apparatuses.

In particular, the coaxial cable can be directly connected to the television apparatuses (like in the case of the derived plugs indicated with 18A, 18B, 18C, 18D) or else can support a television and satellite signal and, in such a case, is connected, at 22, to a distributor element 21, the outputs 23, 24 of which are sent, respectively, to one or more television apparatuses and to a decoder 25 of the satellite video signal.

In figure 3, the distributor apparatus 10 foresees two inputs 11B, 12B, respectively closed on the insulated 75 Ohm closing impedance 31 and on a connection in series between a television station 32, connected to an antenna 15, and an IF/IF station 33, connected to a dish 13.

The distribution plugs 30A, 30B, 30C, 30D that can be used on the front 17 of the distributor 10 are connected, as previously through cabled conductors 40, to a series of derived plugs 18A, 18B, 18C, 18D, the connections 20 of which, in this case, are all connected, through a coaxial cable, at 22 to respective distributor elements 21; the outputs 23, 24 of such distributor elements 21 are then sent, respectively, to one or more television apparatuses and to respective decoders 25 of the satellite video signal.

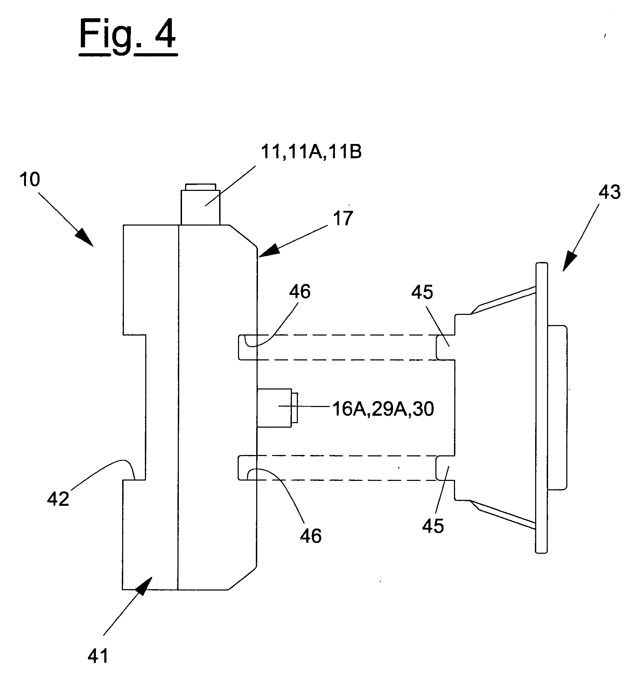

As already stated previously, the distributor 10 can advantageously be installed inside DIN panels or cabinets and able to be housed, for such a purpose, inside a modular container (generically indicated with 41 in figure 4) of the DIN type, with a recessed profile.

In particular, the distributor 10 can be installed in a modular cabinet with DIN rails, which engage on the respective shaped grooves 42 of the containers 41 and, therefore, in such a way, the same distributor 10 and the other apparatuses present in the cabinet (such as power supplies, end-cell rectifiers, switches, disconnecting switches and other electronic apparatuses in general) can be fixed to the supports consisting of DIN rails.

In preferred but not limiting example embodiments of the invention, indeed, it is possible to foresee the installation of one or more distributors 10 inside the modular containment cabinet, associated with respective DIN rails (in particular of the DIN type 35), which engage in the grooves 42 of the containers 41, together with telephone exchanges and relative CPUs, telephone interfaces and/or other electronic apparatuses.

It should be noted how the distributor apparatus 10 can be housed in modular cases, also suitable for containing other electronic apparatuses and interfaces; all of this makes it possible to contain all of the parts relative to a given system or unit inside modular cabinets, maintaining the characteristics of high modular capacity and great variety of the apparatuses contained.

According to further non-limiting example embodiments of the present invention, over the container of such a distributor apparatus 10 it is possible to snap-mount a shaped protection element (generically indicated with 43 in figure 4), suitable for protecting the user from possible risks of accidental contact of the fingers with parts of the cabinet or of the electric panel, where the container 41 is installed, subject to high voltages; the shaped element 43 also allows the entirety of the wiring to be contained, at the same time keeping the structural compactness of the cabinet or of the panel.

The protection element 43 is usually shaped like an upturned frustum of pyramid that is open at the top and bottom surfaces of the container and also foresees a series of slits for the circulation of air (not illustrated in the figures) and two pairs of projections 45, formed integrally on the shorter side surfaces of the shaped element 43; the projections 45 can be equipped with respective locking teeth, suitable for engaging inside relative openings 46, foreseen at the front portion 17 of the modular container 41 and on the side of it.

The particular configuration of the shaped element 43, also modular, allows the user's fingers to be protected during the electric connection and wiring operations, which are carried out on the front surface 17 of the apparatus 10; moreover, the space inside the shaped element 43 can advantageously be used to receive the entirety of the connection cables and, finally, the low thickness of the shaped element 43 contributes to containing the overall thickness of the apparatus inside the panel and to keeping the total compactness of the structure.

From the description that has been made the characteristics of the distributor apparatus for television and satellite units, object of the present invention are clear, just as the advantages are also clear.

Finally, it is clear that numerous variants can be brought to the aforementioned distributor apparatus, without departing from the novelty principles inherent in the inventive idea, just as it is clear that in the practical embodiment of the invention the materials, the shapes and the sizes of the illustrated details can be whatever according to requirements and they can be replaced with others that are technically equivalent.

## Claims

1. Distributor apparatus (10) for television and satellite units, of the modular type, suitable for distributing television and/or satellite signals in output towards a series of derived plugs (18A, 18B, 18C, 18D) connected to the unit, **characterised in that** said distributor (10) carries out the functions of a concentrator and switch of the input signals and is installed inside DIN rail panels or cabinets, also being housed in a container (41) or modular DIN case.

2. Distributor apparatus (10) according to claim 1, **characterised in that** said input signals are sent to plugs (11, 12) of the distributor (10) and come from at least one satellite from a single dish (13) or from a multiswitch (14) and from at least one television antenna (15).

3. Distributor apparatus (10) according to claim 1, **characterised in that** the output signals are taken from a series of plugs (16A, 16B, 16C, 16D; 29A, 29B, 29C, 29D; 30A, 30B, 30C, 30D), arranged on a front panel (17) of the distributor (10), connected to said derived plugs (18A, 18B, 18C, 18D).

4. Distributor apparatus (10) according to claim 1, **characterised in that** said derived plugs (18A, 18B, 18C, 18D) comprise switch and/or telephone or interphone interconnection elements (19) and connector elements (20) to connect at least one coaxial cable to the television apparatuses.

5. Distributor apparatus (10) according to claim 4, **characterised in that** said coaxial cable supports television and satellite signals and is connected (22) to at least one distributor element (21), the outputs (23, 24) of which are sent to at least one television apparatus and to at least one decoding means (25) of the video signal.

6. Distributor apparatus (10) according to claim 1, **characterised in that** said distributor (10) includes at least one LED (26) for indicating the presence of an electric power supply, at least one on-switch (27) and other terminals (28) from which the operating power supply can be taken.

7. Distributor apparatus (10) according to claim 1, **characterised in that** the distributor (10) can be used in television and satellite units with a multiswitch from a single cable and in mono-cable television and satellite units.

8. Distributor apparatus (10) according to claim 1, **characterised in that** said distributor (10) is installed inside modular containment cabinets, associated with respective DIN rails, together with other electronic apparatuses.

9. Distributor apparatus (10) according to claim 1, **characterised in that** over the container of said distributor apparatus (10) a shaped protection element (43) is mounted, suitable for protecting the user from possible risks of accidental contact of the fingers with parts of the cabinet or of the electric panel, where the container (41) is installed, subject to high voltages, said shaped element (43) also allowing the entirety of the wiring to be contained and, at the same time, keeping the structural compactness of the cabinet or of the panel.
